# EUROPÄISCHE PATENTSCHRIFT

(11) **EP 2 893 256 B1**
(45) Veröffentlichungstag und Bekanntmachung des Hinweises auf die Patenterteilung: **19.10.2016**
(21) Anmeldenummer: 13753861.7
(22) Anmeldetag: 29.08.2013
(51) Int. Cl.: F23C 3/00, F23L 15/04, F27D 99/00

(54) **STRAHLUNGSHEIZROHR**
RADIANT HEATING PIPE
TUBE RADIANT

(30) Priorität: 04.09.2012 DE 202012103366 U
(43) Veröffentlichungstag der Anmeldung: 15.07.2015
(73) Patentinhaber: WS-Wärmeprozesstechnik GmbH, 71272 Renningen (DE)
(72) Erfinder: WÜNNING, Joachim, G., 71229 Leonberg (DE)
(74) Vertreter: Rüger, Barthelt & Abel
(86) Internationale Anmeldenummer: PCT/EP2013/067942
(87) Internationale Veröffentlichungsnummer: WO 2014/037280

(56) Entgegenhaltungen:
- EP-A2- 0 622 587
- DE-B- 1 074 802
- US-A1- 2010 119 983

## Beschreibung

Gegenstand der Erfindung ist ein Strahlungsheizrohr mit verbesserter Abgas-Rezirkulation.

Strahlungsheizrohre werden zur indirekten Beheizung von Industrieöfen mit Brennstoff eingesetzt. Die Verbrennung findet innerhalb des Strahlungsheizrohrs statt und die entstehende Wärme wird auf das zu beheizende Gut durch Wärmestrahlung übertragen. Solche Strahlungsheizrohre werden beispielsweise in der DE 20 2008 009 065 oder der US 2010/119983 A1 beschrieben. Letztere offenbart den Oberbegriff des Anspruchs 1. Hier sind die speziellen Strahlungsheizrohre in der so genannten Doppel-P-Struktur-Bauart ausgebildet.

Ein Strahlungsheizrohr weist im Allgemeinen einen Brenneranschluss auf, in dem der Brenner angeordnet ist. An den Brenneranschluss schließt sich ein Verzweigungsabschnitt und daran ein Mittelabschnitt an. Das dem Brenner zugeführten Brenngas und die zugeführte Luft oxidieren in dem Strahlungsheizrohr. Die Oxidationszone nimmt einen größeren Raum in dem Strahlungsheizrohr ein. Das an der Verbrennung teilnehmende Gas gelangt durch den Mittelabschnitt in wenigstens einen Rückführungsabschnitt, der mit dem Mittelabschnitt über einen Zwischenabschnitt verbunden ist, das für diesen Zweck wenigstens ein Rohrbogenstück aufweist. Der Mittelabschnitt und der Rückführungsabschnitt bilden eine Schleife, die das Abgas letztendlich in den Verzweigungsabschnitt zurückführt. Das Abgas kann dort teilweise durch einen Abgasauslass abgeführt werden. Dabei kann es beispielsweise die zugeführte Luft aufheizen, und es kann außerdem teilweise in den Mittelabschnitt zurückgeführt werden, so dass wenigstens ein Teil des Abgases rezirkuliert. Strahlungsheizrohre nach der Doppel-P-Strukturbauart weisen zwei Rückführungsabschnitte auf, die ebenso wie der Mittelabschnitt im Allgemeinen zylinderrohrförmig ausgebildet sind. Der Durchmesser des Mittelabschnitts ist dabei typischerweise größer als der Durchmesser jeweils eines der beiden Rückführungsabschnitte.

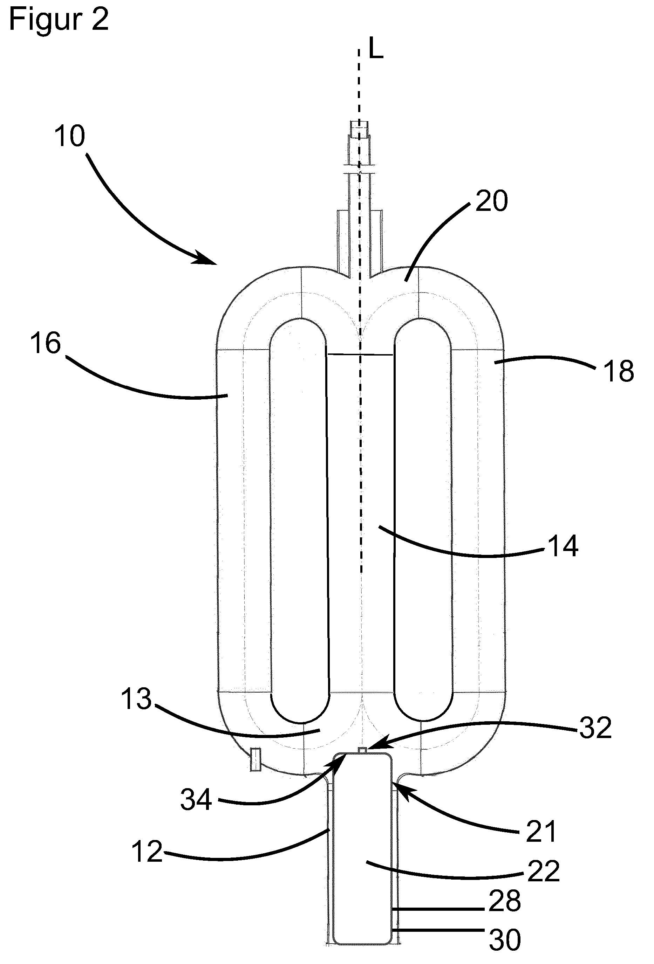

Figur 2 veranschaulicht ein Strahlungsheizrohr 10 nach dem Stand der Technik. Das Strahlungsheizrohr 10 weist einen Mittelabschnitt 14 auf, der zylinderförmig ist. Der Mittelabschnitt 14 weist also einen über die Länge des Mittelabschnitts 14 konstanten Durchmesser auf. Bei solchen Strahlungsheizrohren können ungleichmäßige Temperaturverteilungen in der Strahlrohrwandung, beispielsweise des Mittelabschnittes, sowie unerwünschte CO- und NOx-Werte beobachtet werden.

Die beschriebenen Doppel-P-Strahlungsheizrohre des Standes der Technik haben sich im Einsatz erfolgreich bewährt. Jedoch wurden bei diesen Strahlungsheizrohren Temperaturspitzen der Temperaturverteilung beispielsweise am Anfang des Mittelabschnitts festgestellt. Dies kann unerwünscht sein. Zudem wird fortwährend nach Möglichkeiten gesucht, die CO- und NOx-Emission aus dem Verbrennungsvorgang in Strahlheizrohren zu reduzieren.

Aus der DE 10 74 802 B ist ein Strahlheizrohr mit einem axial in ein geschlossenes Mantelrohr hineinragenden Brennerrohr bekannt. Das Brennerrohr weist Öffnungen auf, die zur Erzielung einer angepassten Verteilung der Wärme des Mantelrohres dienen sollen. Zur Unterstützung der Wärmeverteilung schlägt die DE 10 74 802 B vor, den Querschnitt des Brennerrohres über dessen Länge verschieden groß zu machen.

Aufgabe der Erfindung ist es, ein verbessertes Strahlungsheizrohr anzugeben, das die beschriebenen Nachteile des Standes der Technik mindert und eine reduzierte CO- und NOx-Emission zeigt.

Diese Aufgabe wird erfindungsgemäß mit einem Strahlungsheizrohr mit den Merkmalen nach Anspruch 1 gelöst.

Das erfindungsgemäße Strahlungsheizrohr weist einen Brenneranschluss auf. Dabei handelt es sich um einen Hohlkörper in den ein Brenner eingesetzt werden kann. Der Brenneranschluss weist eine Brenneranschlussöffnung auf. An den Brenneranschluss schließt sich ein Verzweigungsabschnitt an. Ein Brenner kann durch die Brenneranschlussöffnung in den Verzweigungsabschnitt hineinragen oder in dem Brenneranschluss enden. An den Verzweigungsabschnitt schließt sich ein Mittelabschnitt mit einer brennernahen Zone des Mittelabschnittes an. Der Mittelabschnitt weist außerdem eine stromabwärts der brennernahen Zone liegende brennerferne Zone auf. Zwischen der brennernahen Zone und der brennerfernen Zone können noch weitere Zonen des Mittelabschnittes vorhanden sein. Die brennernahe Zone und die brennerferne Zone können sich jeweils über eine mehr oder weniger große Distanz entlang des Mittelabschnittes erstrecken oder die Länge Null aufweisen. Neben dem Mittelabschnitt ist wenigstens ein Rückführungsabschnitt angeordnet. Der wenigstens eine Rückführungsabschnitt ist mit dem Mittelabschnitt über einen Zwischenabschnitt sowie den Verzweigungsabschnitt verbunden. Der Mittelabschnitt und der Rückführungsabschnitt bilden zusammen mit dem Zwischenabschnitt und dem Verzweigungsabschnitt eine Schleife, in der sich eine Umlaufströmung ausbilden kann.

Die brennernahe Zone und die brennerferne Zone des Mittelabschnitts können jeweils entlang des Mittelabschnitts (entlang der Axialrichtung) variierende Durchmesser aufweisen, so dass an jeweils mindestens einer Stelle der Zonen jeweils ein kleinster Durchmesser definiert ist. Der kleinste Durchmesser der brennernahen Zone ist kleiner als der kleinste Durchmesser der brennerfernen Zone. Zirkulierendes Abgas gelangt durch den Mittelabschnitt in den wenigstens einen Rückführungsabschnitt und zurück zum Verzweigungsabschnitt. Ein Teil des Abgases verlässt das Strahlungsheizrohr durch einen Abgasausgang z.B. bei dem Brenner, und kann dabei beispielsweise die zugeführte Luft erwärmen. Ein Teil des Gases kann in den Mittelabschnitt zurück gelangen und über einen Rückführungsabschnitt rezirkulieren. Mit einem solchen erfindungsgemäßen Strahlungsheizrohr können gegenüber dem Stand der Technik verminderte CO- und NOx-Werte und eine gleichmäßigere Wandtemperaturverteilung erreicht werden.

Der Rohrkörper des Mittelabschnitts ist sich konisch in Vorzugsströmungsrichtung erweiternd ausgebildet. Das Strahlungsheizrohr weist eine Taille an dem Übergang zwischen dem Verzweigungsabschnitt und dem Mittelabschnitt auf.

Vorzugsweise ist der Querschnitt des Strahlungsheizrohres, jedenfalls des Mittelabschnittes und des Rückführungsabschnittes, kreisrund. Der Mittelabschnitt und der wenigstens eine Rückführungsabschnitt können aber auch jeweils andere Querschnittsformen aufweisen. Im Falle eines nicht kreisrunden Querschnitts des Mittelabschnitts weist die brennernahe Zone und die brennerferne Zone jeweils einen Querschnitt mit einem kleinsten Flächeninhalt auf, wobei die kleinste Querschnittsfläche der brennernahen Zone kleiner ist als die kleinste Querschnittsfläche der brennerfernen Zone.

Die Abgase strömen im Mittelabschnitt in einer Vor zugsrichtung von der brennernahen in die brennerferne Zone des Mittelabschnitts. Vorzugsweise erweitert sich der Durchmesser bzw. der Querschnitt des Mittelabschnitts des Rohrkörpers in Richtung der Vorzugsströmungsrichtung. Vorzugsweise erweitert sich der Durchmesser bzw. der Querschnitt des Mittelabschnitts des Rohrkörpers in Richtung der Vorzugsströmungsrichtung ohne sich lokal wieder zu verengen (monoton). Der Mittelabschnitt kann als Diffusor wirken und dynamischen Druck in statischen Druck umsetzen.

Vorzugsweise ist das Verhältnis des kleinsten Durchmessers der brennernahen Zone zum kleinsten Durchmesser der brennerfernen Zone kleiner als zwei Drittel. Im Falle nicht-kreisförmiger Querschnittsflächen beträgt die kleinste Querschnittsfläche der brennernahe Zone vorzugsweise höchstens zwei Drittel des Flächeninhalts des kleinsten Querschnitts der brennerfernen Zone.

In den Brenneranschluss kann ein Brenner eingesetzt und dadurch an das Strahlungsheizrohr angeschlossen werden. Ein Brenner hat üblicherweise eine zylinderförmige Grundgestalt. Der Brenneranschluss ist vorzugsweise an die Grundgestalt des Brenners angepasst. Der Durchmesser oder Querschnitt des Brenneranschlusses, insbesondere der Öffnung, ist vorzugsweise größer als der kleinste Durchmesser bzw. Querschnitt der brennernahen Zone.

Vorzugsweise weist das Strahlungsheizrohr insgesamt zwei Rückführungsabschnitte auf, die jeweils mit dem Mittelabschnitt eine Schleife bilden. Auf diese Weise kann eine relativ große Oberfläche des Strahlungsheizrohres geschaffen werden. Bevorzugt weist der Mittelabschnitt eine Längsachse auf und ein Rückführungsabschnitt erstreckt sich parallel zu der Längsachse auf einer Seite des Mittelabschnitts. Der andere Rückführungsabschnitt erstreckt sich parallel auf der gegenüberliegenden Seite des Mittelabschnitts.

Vorhandene Rückführungsabschnitte und der Mittelabschnitt liegen bevorzugt in einer Ebene, um insgesamt ein kompakte Bauform zu erreichen.

Vorzugsweise ist das Strahlungsheizrohr mit zwei Rückführungsabschnitten in einer so genannten Doppel-P-Ausführungsform ausgebildet.

Der Mittelabschnitt und der Rückführungsabschnitt sowie weitere Teile des Strahlungsheizrohres können aus Stahlblech, Stahlguss oder anderen Materialien gefertigt sein. Das Strahlungsheizrohr kann auch aus Keramik hergestellt sein.

An das Strahlungsheizrohr kann ein Brenner wie beispielsweise ein Rekuperator, z.B. ein Spalt-Rekuperatorbrenner, oder ein Regeneratorbrenner angeschlossen sein. Besonders bevorzugt ist der Brenner für flammenlose Oxidation eingerichtet.

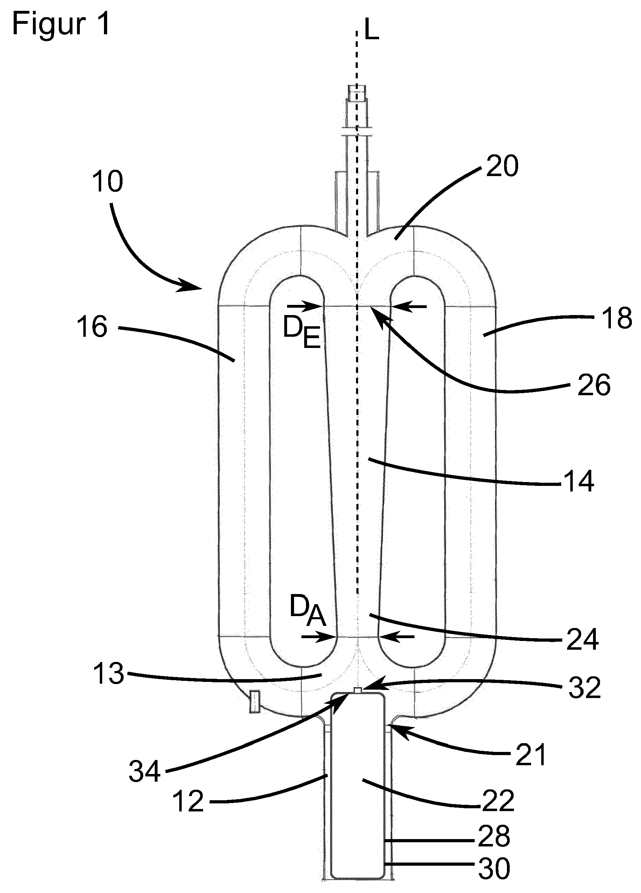

Vorteilhafte Ausführungen der Erfindung ergeben sich aus den abhängigen Patentansprüchen und der Beschreibung. Vorteilhafte Weiterbildungen werden durch die Kombinationen wenigstens eines der unabhängigen Ansprüche mit den Merkmalen eines oder mehrerer Unteransprüche erhalten. Figur 1 der Zeichnung ergänzt die Beschreibung. Figur 2 ist nicht Gegenstand der vorliegenden Anmeldung. Es zeigen in schematischer Darstellung:
Figur 1 - ein Strahlungsheizrohr in einer Doppel-P-Ausführung,
Figur 2 - ein Strahlungsheizrohr des Standes der Technik. Diese Ausführungsform ist nicht Gegenstand der vorliegenden Anmeldung.

Figur 1 zeigt einen Schnitt durch ein erfindungsgemäßes Strahlungsheizrohr 10, das einen Brenneranschluss 12, einen Verzweigungsabschnitt 13, einen Mittelabschnitt 14, einen ersten Rückführungsabschnitt 16 und einen zweiten Rückführungsabschnitt 18 aufweist. Der Mittelabschnitt 14 schließt an den Verzweigungsabschnitt 13 an. In Vorzugsströmungsrichtung S_{V} nach dem Mittelabschnitt 14 ist ein Zwischenabschnitt 20 angeordnet, der zwei bogenförmige Rohrabschnitte aufweist und mit dem Mittelabschnitt 14 verbunden ist. Der erste Rückführungsabschnitt 16 und der zweite Rückführungsabschnitt 18 sind über die bogenförmigen Rohrabschnitte des Zwischenabschnitts 20 mit dem Mittelabschnitt 14 auf der Seite des Strahlungsheizrohres 10 verbunden, die dem Brenneranschluss 12 abgewandt ist. Der erste Rückführungsabschnitt 16 und der zweite Rückführungsabschnitt 18 sind mit dem Verzweigungsabschnitt 13 verbunden, so dass insgesamt zwei Schleifen mit jeweils einem Rückführungsabschnitt 16, 18 vorhanden sind. Es kann auch nur eine Schleife, d.h. ein Rückführungsabschnitt 16, 18, oder, bei mehr als zwei Rückführungsabschnitten 16, 18, entsprechend viele Schleifen vorhanden sein.

In dem Brenneranschluss 12 ist ein Brenner 22 angeordnet. Hierbei kann es sich beispielsweise um einen Spalt-Rekuperator-Brenner handeln. Der Mittelabschnitt 14 weist eine brennernahe Zone 24 und eine brennerferne Zone 26 auf. Der Mittelabschnitt 14 schließt mit der brennernahen Zone 24 an den Verzweigungsabschnitt 13 an. Die brennernahe Zone weist einen kleinsten Durchmesser D_{A} auf. Über die brennerferne Zone 26 ist der Mittelabschnitt 14 mit dem Zwischenabschnitt 20 verbunden. Die brennerferne Zone 26 kann sich, dies gilt auch für die brennernahe Zone 24, entlang einer Länge entlang dem Mittelabschnitt 14 erstrecken, oder sie kann die Länge Null aufweisen. Die brennerferne Zone weist einen kleinsten Durchmesser D_{E} auf. Der kleinste Durchmesser der brennerfernen Zone D_{E} ist größer als der kleinste Durchmesser der brennernahen Zone D_{A}.

Das Strahlungsheizrohr nach Figur 1 weist eine Taille an dem Übergang zwischen dem Verzweigungsstück 13 und dem Mittelabschnitt 14 auf. Vorzugsweise ist das Verhältnis des kleinsten Durchmessers der brennernahen Zone D_{A} zum kleinsten Durchmesser der brennerfernen Zone D_{E} kleiner als zwei Drittel. Die Öffnung 21 des Brenneranschlusses 12 ist vorzugsweise größer als der kleinste Durchmesser D_{A} der brennernahen Zone 24. In dem Mittelabschnitt 14 ist eine Vorzugsströmungsrichtung S_{V} vorgegeben, die von dem Verzweigungsabschnitt 13 zum Zwischenabschnitt 20 weist.

Der Durchmesser des Mittelabschnitts 14 weitet sich in Richtung der Vorzugsströmungsrichtung S_{V} auf und ist konisch ausgebildet. Es ist beispielsweise auch möglich, dass sich der Mittelabschnitt 14 nach dem Verzweigungsabschnitt 13 in einer brennernahen Zone 24 zunächst verjüngt und sich erst anschließend beispielsweise konisch erweitert. Im Ausführungsbeispiel sind der erste Rückführungsabschnitt 16 und der zweite Rückführungsabschnitt 18 grade Rohrstücke mit konstantem kreisrundem Querschnitt gleicher Querschnittsfläche. Sie erstrecken sich jeweils parallel zur Längsachse L des Mittelabschnitts 14. Der Mittelabschnitt 14, der erste Rückführungsabschnitt 16 und der zweite Rückführungsabschnitt 18 liegen in einer Ebene und bilden eine Doppel-P-Ausführung des Strahlungsheizrohres aus. Alternativ kann beispielsweise nur ein einziger Rückführungsabschnitt 16, 18 vorhanden und das Strahlungsheizrohr 10 somit als P-Strahlungsheizrohr ausgebildet sein.

Das Strahlungsheizrohr 10 ist insgesamt aus hitzebeständigem Blech, Rohrmaterial oder Stahlguss gefertigt, kann jedoch auch aus Keramik gefertigt sein. Der Brenner 22 weist wenigstens einen Anschluss für Gas 28 und einen Anschluss für Luft 30 auf. Der Brenner 22 weist außerdem eine oder mehrere Gasauslässe 32 und Luftauslässe 34 auf.

Das insoweit beschriebene Strahlungsheizrohr 10 arbeitet wie folgt:

Dem Brenner 22 werden Gas und Luft über die entsprechenden Anschlüsse zugeführt. Am Brenner tritt Gas über wenigstens einen Gasauslass 32 und die Luft über Luftauslässe 34 mit hoher Geschwindigkeit aus. Das Gas und der Luftsauerstoff reagieren im Strahlungsheizrohr 10. Das heiße Gas strömt durch den Mittelabschnitt 14 in Vorzugsrichtung. Durch das Aufweiten des Querschnitts des Mittelabschnitts 14 kommt es zu einer Verminderung der Strömungsgeschwindigkeit des Gases und zu einer Vergrößerung des statischen Druckes. Der Gasstrom wird im Zwischenabschnitt 20 aufgeteilt. Ein Teil des Gasstromes strömt durch den ersten Rückführungsabschnitt 16, der andere Teil strömt durch den Rückführungsabschnitt 18. Der Gasstrom tritt in das Volumen des Verzweigungsabschnitts 13 ein. Dort wird der Gasstrom teilweise durch einen Abgasauslass abgeführt und kann beispielsweise zur Erwärmung der zugeführten Luft verwendet werden. Der Gasstrom wird teilweise mit dem Frischgas und Luft vermischt. Auf diese Weise kann ein vorteilhafter Betrieb mit flammenloser Oxidation erreicht werden. Das durch das Strahlungsheizrohr 10 strömende Gas heizt das Strahlungsheizrohr 10 auf, das die Wärmestrahlung beispielsweise in den Industrieofen abgibt. Das erfindungsgemäße Ausführungsbeispiel weist eine vergleichmäßigte Temperaturverteilung auf der Strahlungsheizrohrwand auf.

Es wird ein Strahlungsheizrohr 10 bereitgestellt, dass dazu eingerichtet ist, heißes Gas durch einen Mittelabschnitt 14 in einer Vorzugsströmungsrichtung S_{V}, die vom Brenner 22 weg weist, in wenigstens einen Rückführungsabschnitt 16, 18 und vorzugsweise wenigstens teilweise wieder in den Mittelabschnitt 14 zu leiten, so dass sich insgesamt ein Rezirkulationsstrom durch das Strahlungsheizrohr 10 ergibt. Der kleinste Strömungsquerschnitt D_{A} für das Gas in einer brennernahen Zone 24 des Mittelabschnittes 14 ist kleiner als der kleinste Strömungsquerschnitt D_{E} in einer brennerfernen Zone 26. Das erfindungsgemäße Strahlungsheizrohr 10 weist eine Taille im Übergang von einem brennernahen Verzweigungsabschnitt 13 auf den Mittelabschnitt 14 auf.

### Bezugszeichenliste:

- 10: Strahlungsheizrohr
- 12: Brenneranschluss
- 13: Verzweigungsabschnitt
- 14: Mittelabschnitt
- 16: Erster Rückführungsabschnitt
- 18: Zweiter Rückführungsabschnitt
- 20: Zwischenabschnitt
- 21: Öffnung
- 22: Brenner
- 24: Brennernahe Zone
- 26: Brennerferne Zone
- 28: Anschluss für Gas
- 30: Anschluss für Luft
- 32: Gasauslass
- 34: Luftauslass
- D_{A}: Kleinster Durchmesser der brennernahen Zone
- D_{E}: Kleinster Durchmesser der brennerfernen Zone
- S_{V}: Vorzugsströmungsrichtung

## Patentansprüche

1. Strahlungsheizrohr (10)
mit einem Brenneranschluss (12),
mit einem Verzweigungsabschnitt (13),
mit einem Mittelabschnitt (14) und wenigstens einem neben dem Mittelabschnitt (14) angeordneten Rückführungsabschnitt (16, 18), der mit dem Mittelabschnitt (14) eine Schleife bildet,
wobei der Mittelabschnitt (14) eine an den Verzweigungsabschnitt (13) anschließende brennernahe Zone (24) und eine dem Brenneranschluss (12) fern liegende brennerferne Zone (26) aufweist,
**dadurch gekennzeichnet, dass**
die brennernahe Zone (24) einen kleinsten Durchmesser (D_{A}) aufweist, der kleiner ist als der kleinste Durchmesser (D_{E}) der brennerfernen Zone (26),
wobei der Mittelabschnitt einen Rohrkörper aufweist, der konisch in Vorzugsströmungsrichtung erweiternd ausgebildet ist,
und wobei das Strahlungsheizrohr (10) eine Taille an dem Übergang zwischen dem Verzweigungsabschnitt (13) und dem Mittelabschnitt (14) aufweist.

2. Strahlungsheizrohr nach einem der vorherigen Ansprüche, wobei das Verhältnis des kleinsten Durchmessers der brennernahen Zone (D_{A}) zum kleinsten Durchmesser der brennerferne Zone (D_{E}) kleiner als 2/3 ist.

3. Strahlungsheizrohr nach einem der vorhergehenden Ansprüche, **dadurch gekennzeichnet, dass** der Durchmesser der Öffnung (21) des Brenneranschlusses (12) größer ist, als der kleinste Durchmesser (D_{A}) der brennernahen Zone (24).

4. Strahlungsheizrohr nach einem der vorherigen Ansprüche mit insgesamt zwei Rückführungsabschnitten (16, 18), die jeweils mit dem Mittelabschnitt (14) eine Schleife bilden.

5. Strahlungsheizrohr nach Anspruch 4, **dadurch gekennzeichnet, dass** der Mittelabschnitt (14) eine Längsachse (L) aufweist, und sich die Rückführungsabschnitte (16, 18) parallel zu der Längsachse (L) des Mittelabschnitts (14) erstrecken.

6. Strahlungsheizrohr nach einem der vorhergehenden Ansprüche, **dadurch gekennzeichnet, dass** der Mittelabschnitt (14) und die vorhandenen Rückführungsabschnitte (16, 18) in einer Ebene liegen.

7. Strahlungsheizrohr nach einem der vorhergehenden Ansprüche, **dadurch gekennzeichnet, dass** der Mittelabschnitt (14) und der Rückführungsabschnitt (16, 18) aus Stahlblech oder Stahlguss besteht.

8. Strahlungsheizrohr nach einem der vorherigen Ansprüche, **dadurch gekennzeichnet, dass** an den Brenneranschluss (12) ein Brenner (22) angeschlossen ist.

9. Strahlungsheizrohr nach Anspruch 8, **dadurch gekennzeichnet, dass** der Brenner (22) ein für die flammenlose Oxidation eingerichteter Brenner (22) ist.

## Claims

1. Radiant heating pipe (10),
with a burner connection (12),
with a branch portion (13),
with a middle portion (14) and at least one return portion (16, 18) arranged next to the middle portion (14) and forming a loop with the middle portion (14),
wherein the middle portion (14) has a zone (24) close to the burner and connected to the branch portion (13), and a zone (26) remote from the burner and away from the burner connection (12),
**characterized in that**
the zone (24) close to the burner has a smallest diameter (D_{A}) which is smaller than the smallest diameter (D_{E}) of the zone (26) remote from the burner,
wherein the middle portion has a tube body which is configured widening conically in the preferred flow direction,
and wherein the radiant heating pipe (10) has a constriction at the transition from the branch portion (13) and the middle portion (14).

2. Radiant heating pipe according to one of the preceding claims, wherein the ratio of the smallest diameter (D_{A}) of the zone close to the burner to the smallest diameter (D_{E}) of the zone remote from the burner is less than 2/3.

3. Radiant heating pipe according to one of the preceding claims, **characterized in that** the diameter of the opening (21) of the burner connection (12) is greater than the smallest diameter (D_{A}) of the zone (24) close to the burner.

4. Radiant heating pipe according to any of the preceding claims, with a total of two return portions (16, 18) which each form a loop with the middle portion (14).

5. Radiant heating pipe according to claim 4, **characterized in that** the middle portion (14) has a longitudinal axis (L) and that the return portions (16, 18) extend parallel to the longitudinal axis (L) of the middle portion (14).

6. Radiant heating pipe according to any of the preceding claims, **characterized in that** the middle portion (14) and the existing return portions (16, 18) lie in one plane.

7. Radiant heating pipe according to any of the preceding claims, **characterized in that** the middle portion (14) and the return portions (16, 18) are made of sheet steel or cast steel.

8. Radiant heating pipe according to any of the preceding claims, **characterized in that** a burner (22) is connected to the burner connection (12).

9. Radiant heating pipe according to claim 8, **characterized in that** the burner (22) is a burner (22) set up for flameless oxidation.

## Revendications

1. Tube de chauffage radiant (10) comportant un raccord pour brûleur (12), comportant un segment de bifurcation (13), comportant un segment médian (14) et au moins un segment de retour (16, 18), disposé à côté du segment médian (14), qui forme une boucle avec le segment médian (14), le segment médian (14) présentant une zone (24) proche du brûleur qui se raccorde au segment de bifurcation (13) et une zone (26) éloignée du brûleur qui est éloignée du raccord pour brûleur (12), **caractérisé en ce que** la zone (24) proche du brûleur présente un plus faible diamètre (D_{A}) qui est inférieur au plus faible diamètre (D_{E}) de la zone (26) éloignée du brûleur, le segment médian présentant un corps tubulaire ayant une forme conique qui s'élargit dans la direction d'écoulement préférée, et le tube de chauffage radiant (10) présentant un rétrécissement au niveau de la transition entre le segment de bifurcation (13) et le segment médian (14).

2. Tube de chauffage radiant selon l'une des revendications qui précèdent, le rapport entre le plus faible diamètre (D_{A}) de la zone proche du brûleur et le plus faible diamètre (D_{E}) de la zone éloignée du brûleur, est inférieur à 2/3.

3. Tube de chauffage radiant selon l'une des revendications qui précèdent, **caractérisé en ce que** le diamètre de l'ouverture (21) du raccord pour brûleur (12) est supérieur au plus faible diamètre (D_{A}) de la zone (24) proche du brûleur.

4. Tube de chauffage radiant selon l'une des revendications qui précèdent, comportant au total deux segments de retour (16, 18) qui forment chacun une boucle avec le segment médian (14).

5. Tube de chauffage radiant selon la revendication 4, **caractérisé en ce que** le segment médian (14) présente un axe longitudinal (L) et **en ce que** les segments de retour (16, 18) s'étendent parallèlement à l'axe longitudinal (L) du segment de retour (14).

6. Tube de chauffage radiant selon l'une des revendications qui précèdent, **caractérisé en ce que** le segment médian (14) et les segments de retour (16, 18) existants se situent dans un plan.

7. Tube de chauffage radiant selon l'une des revendications qui précèdent, **caractérisé en ce que** le segment médian (14) et le segment de retour (16, 18) sont réalisés en tôle d'acier ou en fonte d'acier.

8. Tube de chauffage radiant selon l'une des revendications qui précèdent, **caractérisé en ce qu'**un brûleur (22) est raccordé au raccord (12) pour brûleur.

9. Tube de chauffage radiant selon la revendication 8, **caractérisé en ce que** le brûleur (22) est un brûleur (22) aménagé pour l'oxydation sans flamme.
